# EUROPEAN PATENT SPECIFICATION

(11) **EP 1 795 749 B1**
(45) Date of publication and mention of the grant of the patent: **04.03.2009**
(21) Application number: 06126014.7
(22) Date of filing: 13.12.2006
(51) Int. Cl.: F04B 5/02, F04B 37/12, G01N 30/00, G01N 30/02

(54) **High pressure pumping apparatus with coupled volumes in a pump working chamber**
Hochdruckpumpe mit gekoppelten Kammern im Kompressionsraum
Pompe à haute pression avec deux volumes de compression couplés dans une chambre de pompage

(43) Date of publication of application: 13.06.2007
(73) Proprietor: Agilent Technologies, Inc., Santa Clara, CA 95051 (US)
(72) Inventor: Haertl, Hans-Georg, 76227 Karlsruhe (DE)
(74) Representative: Barth, Daniel Mathias

(56) References cited:
- EP-A1- 0 309 596
- GB-A- 2 076 904
- GB-A- 2 180 302
- US-A1- 2003 118 459
- US-A1- 2003 183 565

## Description

### BACKGROUND ART

The present invention relates to a pumping apparatus for delivering liquid at a high pressure at which compressibility of the liquid becomes noticeable.

In high performance liquid chromatography (HPLC), a liquid has to be provided usually at very controlled flow rates (e. g. in the range of microliters to milliliters per minute) and at high pressure (typically 200 -1000 bar and beyond up to even 2000 bar) at which compressibility of the liquid becomes noticeable. A general introduction into HPLC can be found e.g. under http://hplc.chem.shu.edu/HPLC/index.html. Some basic principles of reciprocating single piston pumps used in HPLC are described e.g. in http://hplc.chem.shu.edu/HPLC/index.html.

GB 1522552 discloses a pumping system for HPLC having a flow inducer to provide a high pressure metering are liquid.

EP 0309596 A1 discloses an HPLC pump system providing stroke volume variation in order to reduce pulsations.

US 6,712,587 B2 discloses a hydraulic amplifier pump for use in HPLC.

GB 2180302 A discloses a liquid dispense system, the teaching thereof forming the preamble to claim 1.

### DISCLOSURE

It is an object of the invention to provide an improved pumping apparatus for high pressure liquid delivery. The object is solved by the independent claim(s). Further embodiments are shown by the dependent claim(s).

Embodiments according to the present invention provide a pumping apparatus for delivering liquid at a high pressure at which compressibility of the liquid becomes noticeable. The pumping apparatus has a piston reciprocating in a pump working chamber having a first and a second volume. A movement of the piston into a first direction decreases the first volume and increases the second volume. Accordingly, a movement of the piston into a second direction opposite to the first direction increases the first volume and decreases the second volume. The first and second volumes are coupled to each other as long as a pressure in the first volume exceeds a pressure in the second volume. An outlet valve is provided for coupling the second volume with an outlet of the pumping apparatus as long as a pressure in the second volume exceeds a pressure at the outlet.

The coupling of the first and second volumes of the pump working chamber allows balancing forces onto the piston, so that a drive coupled to the piston for reciprocating the piston is exposed to lesser force requirements. This may allow using smaller drives which in turn may even provide an improved dynamic behavior and in general are usually less costly.

In one embodiment, the pumping apparatus has a given area proportion A between a first effective area of the piston facing the first volume and a second effective area of the piston facing the second volume. The first and second effective areas are opposing each other. With first effective area being greaterthan the second, a force required to move the piston is partly compensated, but still allowing to achieve a pressure increase in the second volume over the first volume. The force compensation becomes increased with the area proportion A getting doser to one, while greater area proportions A lead to less compensation and thus greater force requirements onto the drive of the piston. On the other hand, greater values of the area proportion A can lead to higher achievable pressure at the outlet of the pumping apparatus. Criteria for selecting the area proportion might be force requirements, dynamic, size, etc. of the piston drive. In some embodiments, area proportions (first effective area / second effective area) A of 2:1, 3:2, 4:3, etc. have been found useful for certain applications and balancing the contravening requirements of achievable outlet pressure and force requirements of the piston drive in certain applications.

In one embodiment, the first volume of the pump working chamber receives liquid at an inlet pressure, which can be ambient pressure or provided by an inlet pump. A control unit is provided for controlling such inlet pressure to be in a given pressure proportion P to the pressure at the outlet of the pumping apparatus. The pressure proportion P (outlet pressure / inlet pressure) is preferably selected essentially in accordance with the area proportion A, to be A ≈ P. E. g. in case the pressure proportion is selected to be 2:1 (i. e. the first effective area is twice as large as the second effective area) the pumping apparatus can provide an outlet pressure of up to twice the inlet pressure. In case the pumping apparatus has to provide a certain outlet pressure (e. g. in order to drive a mobile phase through a stationary phase in a liquid chromatography application), the control unit might control the inlet pressure, whereas the outlet pressure then follows based on the given pressure proportion.

One or more pressure sensors for sensing values indicative of pressure might be provided at the inlet and/or outlet of the pumping apparatus, thus allowing to sense and control the pressures and/or the pressure proportion P.

The inlet pressure is preferably provided by an inlet pump coupled to at least one of the first and second volumes to provide liquid thereto at the inlet pressure. The inlet pump might be any kind of pump allowing to provide the liquid at the inlet pressure and might be embodied as a piston pump or a gear pump.

In one exemplary embodiment with A = P = 2, the inlet pump is adapted to provide the liquid at 1/P (half in this example) of a required outlet pressure of the pumping apparatus, with the pumping apparatus providing a value of the area proportion A (2:1 in this example). If e.g. an outlet pressure of about 1200 bar is required with an inlet pump providing liquid to the inlet at about 600 bar, the pumping apparatus can thus deliver the liquid at the outlet at the about 1200 bar, but is only exerted to force requirements of 600 bar (i.e. the difference between the output and the input pressure: 1200bar - 600bar = 600bar). In such embodiment, the inlet pump might be embodied mainly to provide the inlet pressure but with lesser accuracy requirements regarding liquid flow rate. The pumping apparatus, on the other hand, in this embodiment might be designed to provide flow rates at higher accuracy, so that in total a pump results allowing driving liquids with high flow rate accuracy and at high pressure.

In one embodiment, the piston is provided to have on one side the first effective area facing the first volume and on an opposing side the second effective area facing the second volume. The side of the piston facing the second volume is preferably coupled via a piston rod to a drive.

A return mechanism coupled to the piston and being adapted for counteracting against the movement of the piston might be provided to apply a force onto the piston in opposite direction as the drive, as well known in the art and disclosed e.g. in the aforementioned EP 0309596 A1, the teaching thereof shall be incorporated herein by reference.

Sealing might be provided for sealing the pump working chamber against the drive and/or to seal the first and second volumes against each other.

The drive might comprise at least one of a spindle drive mechanism, a linear motor, a stepper motor, a DC-Motor, a VR-Motor; a driving rod coupled to the piston.

The return mechanism might comprise at least one of a spring, a hydraulic cylinder, a drive mechanism, a deflection mechanism, a return rod coupled to the piston.

Valves applied might be one or more of a check valve, an active valve, a solenoid valve.

The inlet pressure might be in the range of 100 to 1000bar, preferably between 300 and 700 bar, and more preferably about 600bar. The achievable outlet pressure might be in the range of 500 to 2000bar, preferably between 800 and 1500 bar, and more preferably about 1200bar. A flow rate of the liquid at the outlet might be in the range of nanoliter per minute to milliliter per minute, and more preferably in the range of microliter per minute to milliliter per minute.

The coupling between the first and the second volumes can be provided by a conduit and preferably further comprises a coupling valve. In one embodiment, the first and second volumes are both coupled to the inlet pump, so that the coupling might also comprise the inlet pump.

Embodiments of the invention can be partly or entirely supported by one or more suitable software programs, which can be stored on or otherwise provided by any kind of data carrier, and which might be executed in or by any suitable data processing unit. Software programs or routines can be preferably applied to control the piston movement e.g. to minimize pump ripple and/or compensate physical effects influencing precision and accuracy.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawing(s). Features that are substantially or functionally equal or similar will be referred to by the same reference sign(s).

Fig. 1 shows an exemplary embodiment of a pumping apparatus 10 for delivering liquid at a high pressure at which compressibility of the liquid becomes noticeable.

Fig. 2 shows a more detailed embodiment of the pumping apparatus 10.

Fig. 3 shows an embodiment of a dual parallel pump 300 comprising to pumping apparatuses 10A and 10B, which can be embodied as shown in the Figures 1 and 2.

Fig. 4 shows another embodiment of a dual parallel pump in a principle drawing.

Figure 5 shows a liquid separation system 500.

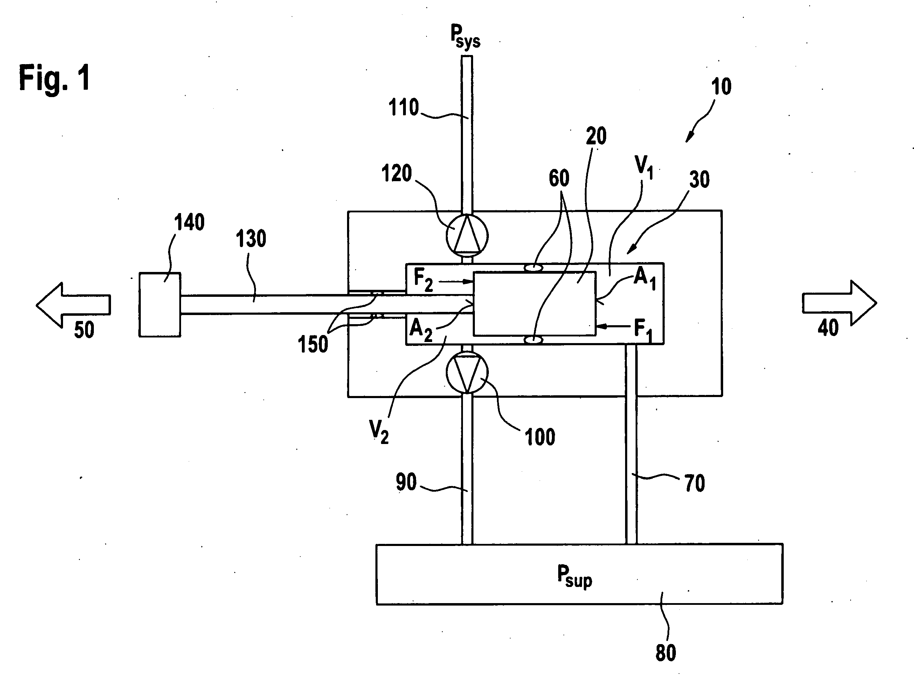

In Fig. 1, a piston 20 is reciprocating in a pump working chamber 30 having a first volume V1 and a second volume V2. A movement of the piston 20 into a first direction 40 decreases the first volume V1 and accordingly increases the second volume V2. Accordingly, a movement of the piston 20 in a second direction 50 (opposite to the first direction 40) increases the first volume V1 and decreases the second volume V2. The first and second volumes V1 and V2 are separated from each other in the pump working chamber 30, in the embodiment of Figure 1 by a seal 60, which can be e.g. a polymeric piston seal as known in the art.

The first and the second volumes V1 and V2 are coupled to each other via a first conduit 70, a pressure supply 80, a second conduit 90, and a coupling valve 100. The pressure supply 80 is providing liquid at a pressure Psup. Due to the coupling of the first volume V1 and the pressure supply 80 via the first conduit 70, the volume V1 will also be under pressure Psup. Accordingly, due to the coupling of the second volume V2 with the pressure supply 80 via the second conduit 90 and the coupling valve 100, the second volume V2 will also be under pressure Psup. However, due to the unidirectional flow characteristics of the coupling valve 100, the second volume V2 will only be at pressure Psup as long as the pressure in the volume V2 does not exceed Psup.

Further coupled to the second volume V2 is an outlet 110, which might be coupled to a system at a pressure Psys. In the embodiment of Figure 1, an outlet valve 120 is provided at the outlet 110, which also provides a unidirectional flow control, so that the outlet valve 120 is coupling the second volume V2 to the system Psys as long as the pressure in the second volume V2 exceeds the system pressure Psys.

Further in Fig. 1, a piston rod 130 is coupled to the piston 20 in order to move the piston 20. A drive 140 is coupling to the piston rod 130 in order to drive the piston 20. The drive 140 might comprise a return mechanism (not shown in Fig.1) as known in the art. In the embodiment of Fig. 1, a drive seal 150 is provided for sealing the second volume V2 against the piston rod 130 and the drive 140. Details about the drive 140, the return mechanism, the rod 130 are disclosed e. g. in the aforementioned EP 0309596 A1 and shall be incorporated herein by reference.

In Fig. 1, the piston 20 has a first effective area A1 facing the first volume V1 and a second effective area A2 facing the second volume V2. In the embodiment of Fig. 1, the first effective area A1 is larger than the second effective area A2, and both effective areas A1 and A2 are at opposing sides of the piston 20. The ratio of the second effective area A1 to the first effective area A2 shall be denoted as A. In the example of Fig. 1, the ratio A is about 3:2.

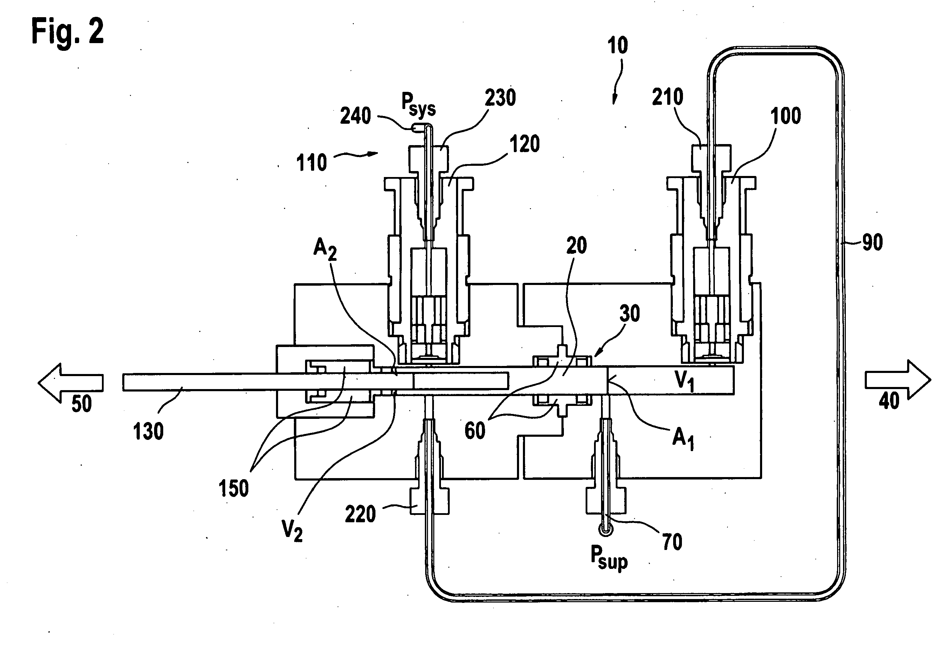

The embodiment of Fig. 2 substantially corresponds to the principle drawing of Fig. 1. However, main difference is that the first volume V1 is directly coupled to the second volume V2 via the second conduit 90. Further, the coupling valve 100 is now located coupled directly to the outlet of the first volume V1. The second conduit 90, which might be embodied as a capillary, is coupled via a fitting 210 to the coupling valve 100 and via another fitting 220 to the second volume V2. Another fitting 230 is shown in Fig. 2 to couple another conduit 240, which might also be a capillary, to the outlet valve 120.

The first volume V1 receives the liquid via the first conduit 70 at the pressure Psup, and the second volume V2 outputs liquid at the outlet 110 at the pressure Psys.

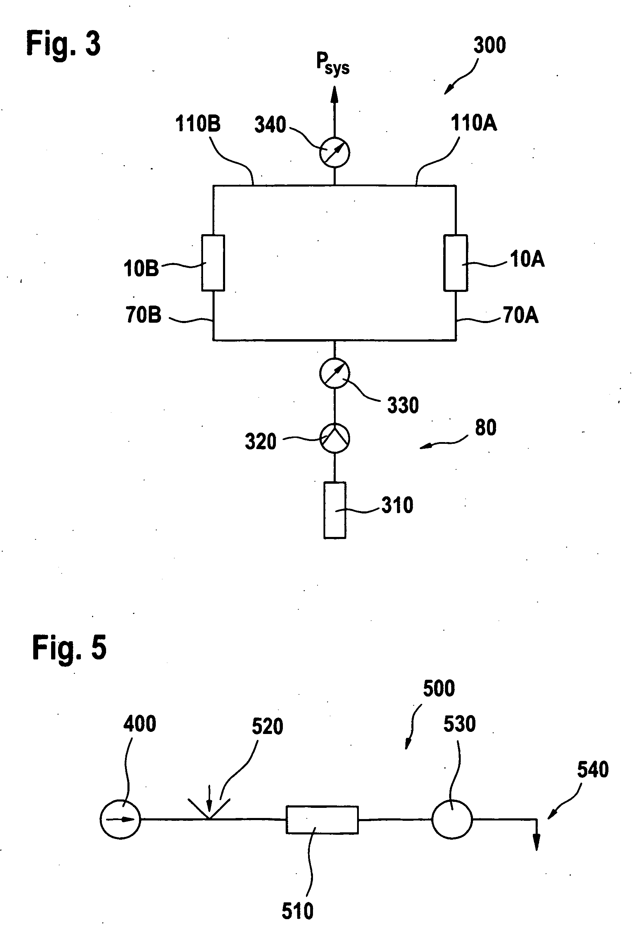

Pressure sensors might be coupled to the inlet and/or the outlet of the pumping apparatus 10 in order to measure one or both of the pressures Psup and Psys, as shown e.g. in Fig. 3 below.

Operation of the examples in both Fig. 1 and Fig. 2 shall now be illustrated. Assuming that the pumping apparatus 10 is applied in an HPLC system (e.g. as illustrated later with respect to Fig. 5), so that the pumping apparatus 10 has to drive a mobile phase (as the liquid to be moved) through a chromatographic column coupled to the outlet 110. In most applications, the mobile phase has to be driven at a given and usually constant flow rate through the column, thus leading to a certain system pressure Psys (resulting from the hydraulic resistance of the system such as the column and capillaries).

In a first cycle, the piston 20 shall be at its left dead center, so that the first volume V1 being maximal and the second volume V2 being minimal. The first volume V1 is at the pressure Psup as provided from the pressure supply 80.

During the first cycle, i.e. when the piston 20 moves in the direction 40, the first volume V1 will be compressed and the liquid in volume V1 will be pressed out of the first volume V1. Due to the pressure increase in the first volume V1, the coupling valve 100 opens and supplies liquid into the second volume V2. Any liquid volume which cannot be filled into the second volume V2 (in case V2 is smaller than V1) will be provided (back) to the pressure supply 80. Alternatively, in case a second pumping apparatus is used e.g. in parallel (see below), liquid which cannot be filled into the second volume V2 can be provided to a first volume V1' of such second pumping apparatus.

The ratio of the first effective area A1 to the second effective area A2 shall be A, and the input pressure Psup shall be selected (or is preferably controlled) to be the output pressure Psys divided by A. In this case, the movement of the piston into direction 40 will supply liquid from the first volume into the second volume. Due to the unidirectional valve 120 and as Psys should be larger than the pressure resulting in the second volume V2, there will be no supply of liquid into the system during the first cycle.

Once the piston 20 is at its right dead point and thereafter moves into the direction 50 during a second cycle, pressure in the second volume increases and the coupling valve 100 closes as soon as the pressure in V2 exceeds the pressure (Psup) in V1. At the same time liquid is sucked from the pressure supply 80 into the first volume V1 (at pressure Psup).

When the pressure in the second volume V2 reaches the system pressure Psys, the outlet valve 120 opens and the pumping apparatus 10 delivers liquid into the system during a third phase.

When the piston 20 reaches its left dead point, the process reverses and the afore-described sequence of phases one, two and three starts again.

During the third phase (i.e. supply phase), when the pumping apparatus 10 supplies liquid into the system, the liquid flow rate into the system is mainly determined by the second effective area V2 and the velocity of the movement of this piston 20.

Due to the effect of compressibility of the liquid, usually during the second phase, pulsation effects (i. e. pressure drops and over shooting) might occur, and adequate counter measures as known in the art can be provided. One way to encounter pulsation can be to expedite the second phase, i.e. to control the piston 20 to move faster during the beginning of the second phase.

As the piston 20 is facing both volumes V1 and V2 at its opposing ends, the piston 20 will experience forces from both volumes but in opposing directions, as indicated in Fig. 1. The pressure in the first volume V1 results in a first force F1 being proportional to the product of the pressure in the first volume V1 and the first effective area A1. Accordingly, a second force F2 is proportional to the pressure in the second volume V2 and the second effective area A2.

During the first phase when the piston 20 moves into the direction 40, the pressure in both volumes V1 and V2 is substantially the same as they are both coupled together. Thus, the resulting force onto the piston 20 is partly compensated. In case e.g. A=2 (A1 = 2* A2), only half (1 - 1/A) of the force is required over a pump system with only the first volume V1 (and no force compensation from V2).

In order to achieve a continuous supply of the liquid into the system usually two pumps are provided either in serial or parallel manner, as known in the art. The operation of both pumps is typically shifted by about 180 degrees, so that one pump is supplying into the system while the other is sucking liquid, and vice versa.

In the example of Fig. 3, first conduits 70A and 70B are coupled to the pressure supply 80, which might be a supply pump 310 and might have an outlet valve 320. An inlet pressure sensor 330 might be coupled to the common inlet of the pumping apparatuses 10A and 10B. The outlet 110A of the first pumping apparatus 10A and the outlet 110B of the second pumping apparatus 10B are coupled together to supply the system. A pressure sensor 340 might be coupled to the common outlets 110A and 110B. As illustrated above, liquid from the first volume V1 of the first pumping apparatus 10A which cannot be filled into the second volume V2 thereof can - in the embodiment of Fig. 3 - be provided to a first volume V1' of the second pumping apparatus 10B, and vice versa.

Similar to the example in Fig. 3 in a parallel manner, the two pumping apparatuses 10A and 10B can also be coupled in a serial manner (not shown in the figures), with the outlet 110A of the first pumping apparatus 10A being coupled to the inlet 70B of the second pumping apparatus 10B, and the outlet 110B of the second pumping apparatus 10B providing the outlet of the pump.

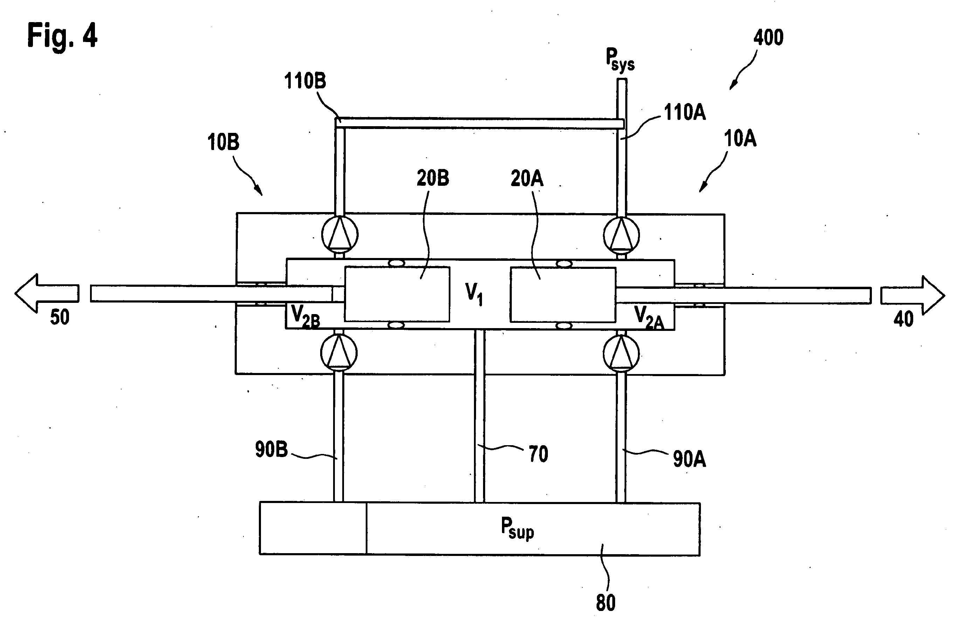

In the embodiment of Fig. 4, the two pumping apparatuses 10A and 10B share a common first volume V1. Both pistons 20A and 20B are moved either into direction 40 or the opposite direction 50. In this embodiment, the volume V1 remains substantially the same, and a compensation between both pumping apparatuses 10A and 10B is achieved. During the supplying phase of one of the two pumping apparatuses 10A and 10B, the supplying pump supplies virtually "through" V1 and the valve into V2 of the other pump, which at that phase is sucking liquid.

Figure 5 shows a liquid separation system 500. A pump 400, which might be embodied as illustrated in Fig. 3 or 4, drives a mobile phase through a separating device 510 comprising a stationary phase. A sampling unit 520 is provided between the pump 400 and the separating device 510 in order to introduce a sample fluid to the mobile phase. The stationary phase of the separating device 510 is adapted for separating compounds of the sample liquid. A detector 530 is provided for detecting separated compounds of the sample fluid. A fractionating unit 540 can be provided for outputting separated compounds of sample fluid.

Further details of such liquid separation system 500 are disclosed with respect to the Agilent 1200 Series Rapid Resolution LC system or the Agilent 1100 HPLC series, as both provided by the applicant Agilent Technologies.

## Claims

1. A pumping apparatus (10) for delivering liquid, comprising
a piston (20) adapted for reciprocation in a pump working chamber (30), wherein a movement of the piston (20) into a first direction (40) decreases a first volume (V1) in the pump working chamber (30) and increases a second volume (V2) in the pump working chamber (30), and a movement of the piston (20) into a second direction (50) opposite to the first direction (40) increases the first volume (V1) and decreases the second volume (V2),
a coupling (70, 80, 90, 100) for coupling the first volume (V1) with the second volume (V2) as long as a pressure (Psup) in the first volume (V1) exceeds a pressure in the second volume (V2), and
an outlet valve (120) for coupling the second volume (V2) with an outlet (110) of the pumping apparatus (10) as long as a pressure in the second volume (V2) exceeds a pressure (Psys) at the outlet (110),
**characterized by**
a control unit adapted to control the inlet pressure to be in a given pressure proportion to the pressure at the outlet (110),
wherein the pumping apparatus (10) is adapted for delivering liquid at a high pressure at which compressibility of the liquid becomes noticeable.

2. The pumping apparatus (10) of claim 1, wherein:
a first effective area (A1) of the piston (20) facing the first volume (V1) is in a given area proportion (A) to a second effective area (A2) of the piston (20) facing the second volume (V2), wherein the first effective area (A1) is opposing the second effective area (A2), and the first effective area (A1) is greater than the second effective area (A2) of the piston (20), so that a force required to move the piston (20) into the first direction (40) is partly compensated.

3. The pumping apparatus (10) of claim 1 or any one of the above claims, wherein
the first volume (V1) receives liquid at an inlet pressure, comprising at least one of:
the pressure proportion of the inlet pressure to the outlet pressure is selected essentially in accordance to the area proportion of second are to the first effective area (A1);
an inlet coupled to the first volume (V1) for receiving liquid at the inlet pressure;
a first pressure sensor adapted for sensing a value indicative of the inlet pressure;
a second pressure sensor adapted for sensing a value indicative of the pressure at the outlet (110);
an inlet pump coupled to at least one of the first volume (V1) and the second volume (V2) and is adapted to provide liquid thereto at the inlet pressure;
the inlet pump comprises at least one of a piston pump, a gear pump, a hydraulic pump, a pneumatic pump.

4. The pumping apparatus (10) of claim 1, comprising at least one of:
one side of the piston (20) provides a first effective area (A1) facing the first volume (V1), and an opposing side of the piston (20) provides a second effective area (A2) facing the second volume (V2);
the side of the piston (20) facing the second volume (V2) is coupled via a piston (20) rod to a drive,
a drive coupled to the piston (20) adapted for reciprocating the piston (20);
a return mechanism, coupled to the piston (20), being adapted for counteracting against the movement of the piston (20) into a first direction (40) and to apply a force onto the piston (20) in order to move the piston (20) into a second direction (50) opposite to the first direction (40).
a drive seal (150) adapted for sealing the pump working chamber (30) against the drive;
a seal (60) adapted for sealing the first volume (V1) against the second volume (V2);
the drive comprises at least one of a spindle drive mechanism, a linear motor, a stepper motor, a DC-Motor, a VR-Motor; a driving rod coupled to the piston (20);
the return mechanism comprises at least one of a spring, a hydraulic cylinder, a drive mechanism, a defection mechanism, a return rod coupled to the piston (20);
the coupling comprises a coupling valve for coupling the first volume (V1) with the second volume (V2) as long as a pressure in the first volume (V1) exceeds a pressure in the second volume (V2).

5. The pumping apparatus (10) of claim 1 or any one of the above claims, comprising at least one of:
the inlet pressure is in the range of 100 to 1000bar, preferably between 300 and 700 bar, and more preferably about 600bar;
the achievable outlet pressure is in the range of 500 to 2000bar, preferably between 800 and 1500 bar, and more preferably about 1200bar;
a flow rate of the liquid at the outlet (110) is in the range of nanoliter per minute to milliliter per minute, and more preferably in the range of microliter per minute to milliliter per minute.

6. The pumping apparatus (10, 300, 400) of claim 1 or any one of the above claims, further comprising
a second pumping apparatus (10B) of claim 1 or any one of the above claims,
wherein the first (10A) and the second (10B) pumping apparatus are coupled in a parallel manner, with an inlet (70A) of the first pumping apparatus (10A) being coupled to an inlet (70B) of the second pumping apparatus (10B), and an outlet (110A) of the first pumping apparatus (10) being coupled to an outlet (110B) of the second pumping apparatus (10), thus providing an outlet of the pump.

7. The pumping apparatus (10, 300, 400) of the preceding claim, comprising at least one of:
a liquid outlet of the first pumping apparatus (10A) is phase shifted, preferably essentially 180 degrees, with respect to a liquid outlet of the second pumping apparatus (10B);
the first and the second pumping apparatus (10A, 10B) have a common first volume (V1) in a common pump working chamber (30).

8. A fluid separation system (500), comprising
a separating device (510) comprising a stationary phase for separating compounds of a sample fluid comprised in a mobile phase, and
a pumping apparatus (10) of claim 1 or any one of the above claims, adapted for driving a mobile phase through the separating device.

9. The separation system (500) of the preceding claim, comprising at least one of:
a sampling unit (520) adapted for introducing the sample fluid to the mobile phase,
a detector (530) adapted for detecting separated compounds of the sample fluid,
a fractionating unit (540) adapted for outputting separated compounds of the sample fluid.

10. A method of delivering liquid at a high pressure at which compressibility of the liquid becomes noticeable, comprising
reciprocating a piston (20) in a pump working chamber (30), wherein a movement of the piston (20) into a first direction (40) decreases a first volume (V1) in the pump working chamber (30) and increases a second volume (V2) in the pump working chamber (30), and a movement of the piston (20) into a second direction (50) opposite to the first direction (40) increases the first volume (V1) and decreases the second volume (V2),
coupling (70, 80, 90, 100) the first volume (V1) with the second volume (V2) as long as a pressure (Psup) in the first volume (V1) exceeds a pressure in the second volume (V2),
coupling the second volume (V2) with an outlet (110) of the pumping apparatus (10) as long as a pressure in the second volume (V2) exceeds a pressure (Psys) at the outlet (110), and
controlling the inlet pressure to be in a given pressure proportion to the pressure at the outlet (110).

11. A software program product, preferably stored on a data carrier, for executing the control of the piston (20) movement and for controlling the inlet pressure to be in a given pressure proportion to the pressure at the outlet (110) in the method of the preceding claim 10, when run on a data processing system such as a computer.

## Patentansprüche

1. Pumpvorrichtung (10) zum Zuführen von Flüssigkeit, die aufweist:
einen Kolben (20) zum Hin- und Herbewegen in einer Pumpen-Arbeitskammer (30), wobei eine Bewegung des Kolbens (20) in einer ersten Richtung (40) ein erstes Volumen (V1) in der Pumpen-Arbeitskammer (30) verkleinert und ein zweites Volumen (V2) in der Pumpen-Arbeitskammer (30) vergrößert, und wobei eine Bewegung des Kolbens (20) in einer der ersten Richtung (40) entgegengesetzten zweiten Richtung (50) das erste Volumen (V1) vergrößert und das zweite Volumen (V2) verkleinert,
eine Kupplung (70, 80, 90, 100) zum Verbinden des ersten Volumens (V1) mit dem zweiten Volumen (V2), solange ein Druck (Psup) im ersten Volumen (V1) einen Druck im zweiten Volumen (V2) übersteigt, und
ein Ausgangsventil (120) zum Verbinden des zweiten Volumens (V2) mit einem Ausgang (110) der Pumpvorrichtung (10), solange ein Druck im zweiten Volumen (V2) einen Druck (Psys) am Ausgang (110) übersteigt,
**gekennzeichnet durch**
eine Steuereinheit zum Steuern des Eingangsdrucks derart, dass er in einem bestimmten Verhältnis zum Druck am Ausgang (110) steht,
wobei die Pumpvorrichtung (10) zum Zuführen von Flüssigkeit bei einem hohen Druck dient, bei welchem die Komprimierbarkeit der Flüssigkeit spürbar wird.

2. Pumpvorrichtung (10) nach Anspruch 1, wobei:
eine erste Wirkfläche (A1) des Kolbens (20), die zum ersten Volumen (V1) zeigt, in einem bestimmten Flächenverhältnis (A) zu einer zweiten Wirkfläche (A2) des Kolbens (20) steht, die zum zweiten Volumen (V2) zeigt, wobei die erste Wirkfläche (A1) der zweiten Wirkfläche (A2) gegenüber liegt und wobei die erste Wirkfläche (A1) größer als die zweite Wirkfläche (A2) des Kolbens (20) ist, sodass eine zum Verschieben des Kolbens (20) in der ersten Richtung (40) erforderliche Kraft teilweise aufgehoben wird.

3. Pumpvorrichtung (10) nach Anspruch 1 oder einem beliebigen der vorhergehenden Ansprüche, wobei das erste Volumen (V1) Flüssigkeit bei einem Eingangsdruck aufnimmt, die mindestens eines der folgenden Merkmale aufweist:
das Verhältnis des Eingangsdrucks zum Ausgangsdruck wird im Wesentlichen entsprechend dem Verhältnis der zweiten Fläche zur ersten Wirkfläche (A1) gewählt;
einen mit dem ersten Volumen (V1) verbundenen Eingang zum Aufnehmen von Flüssigkeit beim Eingangsdruck;
einen ersten Drucksensor zum Detektieren eines Wertes, der den Eingangsdruck anzeigt;
einen zweiten Drucksensor zum Detektieren eines Wertes, der den Druck am Ausgang (110) anzeigt;
eine Eingangspumpe, die mindestens mit dem ersten Volumen (V1) oder mit dem zweiten Volumen (V2) verbunden ist und zum Zuführen von Flüssigkeit in das Volumen beim Eingangsdruck dient;
die Eingangspumpe weist mindestens eine der folgenden Pumpen auf: eine Kolbenpumpe, eine Zahnradpumpe, eine hydraulische Pumpe, eine pneumatische Pumpe.

4. Pumpvorrichtung (10) nach Anspruch 1, die mindestens eines der folgenden Merkmale aufweist:
eine Seite des Kolbens (20) stellt eine erste Wirkfläche (A1) bereit, die zum ersten Volumen (V1) zeigt, und eine entgegengesetzte Seite des Kolbens (20) stellt eine zweite Wirkfläche (A2) bereit, die zum zweiten Volumen (V2) zeigt;
die zum zweiten Volumen (V2) zeigende Seite des Kolbens (20) ist über eine Kolbenstange (130) mit einem Antrieb verbunden,
einen mit dem Kolben (20) verbundenen Antrieb zum Hin- und Herbewegen des Kolbens (20);
einen mit dem Kolben (20) verbundenen Rückholmechanismus zum Entgegenwirken gegen die Bewegung des Kolbens (20) in einer ersten Richtung (40) und zum Ausüben einer Kraft auf den Kolben (20), um den Kolben (20) in einer der ersten Richtung (40) entgegengesetzten zweiten Richtung (50) zu verschieben,
eine Antriebsdichtung (150) zum Abdichten der Pumpen-Arbeitskammer (30) gegen eine Dichtung (60), die zum Abdichten des ersten Volumens (V1) gegen das zweite Volumen (V2) dient;
der Antrieb weist mindestens einen der folgenden Antriebe auf: einen Spindelantriebsmechanismus, einen Linearmotor, einen Schrittmotor, einen Gleichstrommotor, einen VR-Motor, eine mit dem Kolben (20) verbundene Antriebsstange;
der Rückholmechanismus weist mindestens eines der folgenden Merkmale auf: eine Feder, einen Hydraulikzylinder, einen Antriebsmechanismus, einen Ablenkmechanismus, eine mit dem Kolben (20) verbundene Rückholstange;
die Kupplung weist ein Kupplungsventil zum Verbinden des ersten Volumens (V1) mit dem zweiten Volumen (V2) auf, solange ein Druck im ersten Volumen (V1) einen Druck im zweiten Volumen (V2) übersteigt.

5. Pumpvorrichtung (10) nach Anspruch 1 oder einem beliebigen der vorhergehenden Ansprüche, die mindestens eines der folgenden Merkmale aufweist:
der Eingangsdruck liegt im Bereich von 100 bis 1000 bar, vorzugsweise zwischen 300 und 700 bar und besonders bevorzugt bei etwa 600 bar;
der erreichbare Ausgangsdruck liegt im Bereich von 500 bis 2000 bar, vorzugsweise zwischen 800 und 1500 bar und besonders bevorzugt bei etwa 1200 bar;
eine Fließgeschwindigkeit der Flüssigkeit am Ausgang (110) liegt im Bereich von Nanoliter pro Minute bis Milliliter pro Minute und besonders bevorzugt im Bereich von Mikroliter pro Minute bis Milliliter pro Minute.

6. Pumpvorrichtung (10, 300, 400) nach Anspruch 1 oder einem beliebigen der vorhergehenden Ansprüche, die ferner aufweist:
eine zweite Pumpvorrichtung (10B) nach Anspruch 1 oder einem beliebigen der vorhergehenden Ansprüche,
wobei die erste (10A) und die zweite (10B) Pumpvorrichtung parallel miteinander verbunden sind, indem ein Eingang (70A) der ersten Pumpvorrichtung (10A) mit einem Eingang (70B) der zweiten Pumpvorrichtung (10B) und ein Ausgang (110A) der ersten Pumpvorrichtung (10A) mit einem Ausgang (110B) der zweiten Pumpvorrichtung (10B) verbunden ist und somit einen Ausgang der Pumpe bildet.

7. Pumpvorrichtung (10, 300, 400) nach dem vorhergehenden Anspruch, die mindestens eines der folgenden Merkmale aufweist:
ein Flüssigkeitsausgang der ersten Pumpvorrichtung (10A) ist in Bezug auf einen Flüssigkeitsausgang der zweiten Pumpvorrichtung (10B) vorzugsweise im Wesentlichen um 180 Grad phasenverschoben,
die erste und die zweite Pumpvorrichtung (10A, 10B) weisen ein gemeinsames erstes Volumen (V1) in einer gemeinsamen Pumpen-Arbeitskammer (30) auf.

8. Flüssigkeitstrennsystem (500), das aufweist:
eine Trenneinheit (510), die eine stationäre Phase zum Trennen von Verbindungen einer Probenflüssigkeit aufweist, die in eine mobile Phase einbezogen ist; und
eine Pumpvorrichtung (10) nach Anspruch 1 oder einem beliebigen der vorhergehenden Ansprüche zum Befördern einer mobilen Phase durch die Trenneinheit.

9. Trennsystem (500) nach dem vorhergehenden Anspruch, das mindestens eines der folgenden Merkmale aufweist:
eine Dosiereinheit (520) zum Eingeben der Probenflüssigkeit in die mobile Phase,
einen Detektor (530) zum Detektieren der getrennten Verbindungen der Probenflüssigkeit,
eine Fraktioniereinheit (540) zum Ausgeben der getrennten Verbindungen der Probenflüssigkeit.

10. Verfahren zum Bereitstellen von Flüssigkeit bei einem hohen Druck, bei welchem die Komprimierbarkeit der Flüssigkeit spürbar wird, wobei das Verfahren folgende Schritte aufweist:
Hin- und Herbewegen eines Kolbens (20) in einer Pumpen-Arbeitskammer (30), wobei eine Bewegung des Kolbens (20) in einer ersten Richtung (40) ein erstes Volumen (V1) in der Pumpen-Arbeitskammer (30) verkleinert und ein zweites Volumen (V2) in der Pumpen-Arbeitskammer (30) vergrößert, und wobei eine Bewegung des Kolbens (20) in einer der ersten Richtung (40) entgegengesetzten zweiten Richtung (50) das erste Volumen (V1) vergrößert und das zweite Volumen (V2) verkleinert,
Verbinden (70, 80, 90, 100) des ersten Volumens (V1) mit dem zweiten Volumen (V2), solange ein Druck (Psup) im ersten Volumen (V1) einen Druck im zweiten Volumen (V2) übersteigt,
Verbinden des zweiten Volumens (V2) mit einem Ausgang (110) der Pumpvorrichtung (10), solange ein Druck im zweiten Volumen (V2) einen Druck (Psys) am Ausgang (110) übersteigt, und
Steuern des Eingangsdrucks derart, dass er in einem bestimmten Verhältnis zum Druck am Ausgang (110) steht.

11. Softwareprogrammprodukt, das vorzugsweise auf einem Datenträger gespeichert ist, zum Ausführen der Steuerung der Bewegung des Kolbens (20) und zum Steuern des Eingangsdrucks gemäß dem Verfahren nach dem vorhergehenden Anspruch, wenn dieses in einem Datenverarbeitungssystem wie beispielsweise einem Computer ausgeführt wird, derart, dass er in einem bestimmten Verhältnis zum Druck am Ausgang (110) steht.

## Revendications

1. Pompe (10) pour la distribution de liquide, comprenant
un piston (20), adapté de manière à permettre son mouvement alternatif dans une chambre de pompage (30), dans laquelle un mouvement du piston (20) dans une première direction (40) permet de réduire un premier volume (V1) dans la chambre de pompage (30) et d'augmenter un second volume (V2) dans la chambre de pompage (30), un mouvement du piston (20) dans une seconde direction (50) opposée à la première direction (40) permettant d'augmenter le premier volume (V1) et de réduire le second volume (V2),
un accouplement (70, 80, 90, 100) permettant de coupler le premier volume (V1) et le second volume (V2) aussi longtemps qu'une pression donnée (Psup) dans le premier volume (V1) dépasse une pression donnée dans le second volume (V2), et
une vanne de vidange (120) permettant le couplage du second volume (V2) avec une sortie (110) de la pompe (10) aussi longtemps qu'une pression donnée dans le second volume (V2) dépasse une pression donnée (Psys) à la sortie (110).
**caractérisée en ce que**
une unité de contrôle adaptée de manière à réguler la pression d'entrée de façon à être dans un rapport de pression donné à la pression à la sortie (110),
dans laquelle la pompe (10) est adaptée de manière à fournir un liquide à une pression élevée pour laquelle la compressibilité du liquide devient visible.

2. Pompe (10) suivant la revendication 1, dans laquelle :
une première surface efficace (A1) du piston (20) faisant face au premier volume (V1) est dans un rapport de surface donné (A) à une seconde surface efficace (A2) du piston (20) faisant face au second volume (V2), dans laquelle la première surface efficace (A1) est opposée à la seconde surface efficace (A2), et la première surface efficace (A1) est plus grande que la seconde surface efficace (A2) du piston (20), de telle sorte qu'une force donnée nécessaire pour déplacer le piston (20) dans la première direction (40) est partiellement compensée.

3. Pompe (10) suivant la revendication 1 ou l'une des revendications ci-dessus, dans laquelle le premier volume (V1) reçoit le liquide à une pression d'entrée donnée, comprenant au moins une des caractéristiques suivantes :
le rapport de la pression d'entrée à la pression de sortie est essentiellement sélectionné conformément au rapport de surface de la seconde surface à la première surface efficace (A1) ;
une entrée est couplée au premier volume (V1) pour la réception de liquide à la pression d'entrée ;
un premier capteur de pression est adapté de manière à capter une valeur indicative de la pression d'entrée ;
un second capteur de pression est adapté de manière à capter une valeur indicative de la pression de sortie (110) ;
une pompe d'entrée est couplée à au moins un des premier et second volumes (V1 et V2) et est adaptée de manière à lui fournir du liquide à la pression d'entrée ;
la pompe d'entrée comprend au moins un des éléments suivants : une pompe à piston, une pompe à engrenages, une pompe hydraulique, une pompe pneumatique.

4. Pompe (10) suivant la revendication 1, comprenant au moins une des caractéristiques suivantes :
un côté du piston (20) fournit une première surface efficace (A1) faisant face au premier volume (V1), un côté opposé du piston (20) fournissant une seconde surface efficace (A2) faisant face au second volume (V2) ;
le côté du piston (20) faisant face au second volume (V2) est couplé à un entraînement par une tige du piston (20),
un entraînement est couplé au piston (20) adapté de manière à permettre le mouvement alternatif du piston (20) ;
un mécanisme de retour, couplé au piston (20), est adapté de manière à s'opposer au mouvement du piston (20) dans une première direction (40) et à appliquer une force sur le piston (20) afin de déplacer le piston (20) dans une seconde direction (50) opposée à la première direction (40).
un joint d'entraînement (150) est adapté de manière à étanchéifier la chambre de pompage (30) par rapport à l'entraînement ;
un joint (60) est adapté de manière à étanchéifier le premier volume (V1) par rapport au second volume (V2) ;
l'entraînement comprend au moins un des éléments suivants : un mécanisme d'entraînement de broche, un moteur linéaire, un moteur pas-à-pas, un moteur à courant continu, un moteur à régulation de tension, une tige d'entraînement couplée au piston (20) ;
le mécanisme de retour comprend au moins un des éléments suivants : un ressort, un vérin hydraulique, un mécanisme d'entraînement, un mécanisme de déflexion, une tige de retour couplée au piston (20) ;
l'accouplement comprend une vanne d'accouplement permettant de coupler le premier volume (V1) au second volume (V2) aussi longtemps qu'une pression donnée dans le premier volume (V1) dépasse une pression donnée dans le second volume (V2).

5. Pompe (10) suivant la revendication 1 ou l'une des revendications ci-dessus, comprenant au moins l'une des caractéristiques suivantes :
la pression d'entrée se situe entre 100 et 1000 bars, de préférence entre 300 et 700 bars et mieux encore, aux alentours de 600 bars ;
la pression de sortie qui peut être obtenue se situe entre 500 et 2000 bars, de préférence entre 800 et 1500 bars et mieux encore, aux alentours de 1200 bars ;
un débit du liquide à la sortie (110) se situe entre un nanolitre par minute et un millilitre par minute, de préférence entre un microlitre par minute et un millilitre par minute.

6. Pompe (10, 300, 400) suivant la revendication 1 ou l'une des revendications ci-dessus, comprenant en outre :
une seconde pompe (10B) suivant la revendication 1 ou l'une des revendications ci-dessus,
dans laquelle la première (10A) et la seconde (10B) pompes sont couplées de manière parallèle, une entrée (70A) de la première pompe (10A) étant couplée à une entrée (70B) de la seconde pompe (10B), et une sortie (110A) de la première pompe (10) étant couplée à une sortie (110B) de la seconde pompe (10), dotant ainsi la pompe d'une sortie.

7. Pompe (10, 300, 400) suivant la revendication précédente, comprenant au moins une des caractéristiques suivantes :
une sortie de liquide de la première pompe (10A) est décalée en phase, de préférence principalement de 180 degrés, par rapport à une sortie de liquide de la seconde pompe (10B) ;
la première et la seconde pompes (10A, 10B) présentent un premier volume commun (V1) dans une chambre de pompage commune (30).

8. Système de séparation de fluides (500), comprenant :
un dispositif de séparation (510) comprenant une phase stationnaire pour la séparation de composés d'un fluide type inclus dans une phase mobile, et
une pompe (10) suivant la revendication 1 ou l'une des revendications ci-dessus, adaptée de manière à commander une phase mobile à travers le dispositif de séparation.

9. Système de séparation (500) suivant la revendication précédente, comprenant au moins un des éléments suivants :
une unité d'échantillonnage (520) adaptée de manière à introduire le fluide type dans la phase mobile,
un détecteur (530) adapté de manière à détecter les composés séparés du fluide type,
une unité de fractionnement (540) adaptée de manière à permettre la sortie des composés séparés du fluide type.

10. Méthode de distribution de liquide à haute pression pour laquelle la compressibilité du liquide devient visible, comprenant les étapes suivantes :
le mouvement alternatif d'un piston (20) dans une chambre de pompage (30), dans laquelle un mouvement du piston (20) dans une première direction (40) permet de réduire un premier volume (V1) dans la chambre de pompage (30) et d'augmenter un second volume (V2) dans la chambre de pompage (30), un mouvement du piston (20) dans une seconde direction (50) opposée à la première direction (40) permettant d'augmenter le premier volume (V1) et de réduire le second volume (V2),
l'accouplement (70, 80, 90, 100) du premier volume (V1) avec le second volume (V2) aussi longtemps qu'une pression donnée (Psup) dans le premier volume (V1) dépasse une pression donnée dans le second volume (V2),
l'accouplement du second volume (V2) avec une sortie (110) de la pompe (10) aussi longtemps qu'une pression donnée dans le second volume (V2) dépasse une pression donnée (Psys) à la sortie (110), et
le contrôle de la pression d'entrée pour donner un rapport de pression donné à la pression à la sortie (110).

11. Produit logiciel, de préférence enregistré sur un support de données, permettant l'exécution de la commande du mouvement du piston (20) ainsi que le contrôle de la pression d'entrée qui doit être dans un rapport de pression donné à la pression à la sortie (110), conformément à la méthode suivant la revendication 10 qui précède, lorsqu'il tourne sur un système de traitement de données tel qu'un ordinateur.
